# EUROPÄISCHE PATENTSCHRIFT

(11) **EP 3 829 982 B1**
(45) Veröffentlichungstag und Bekanntmachung des Hinweises auf die Patenterteilung: **31.08.2022**
(21) Anmeldenummer: 19746044.7
(22) Anmeldetag: 18.07.2019
(51) Int. Cl.: B65B 29/02, B65B 51/22, B65D 85/804, A47J 31/40

(54) **VERFAHREN ZUR HERSTELLUNG EINER PORTIONSKAPSEL ZUR ZUBEREITUNG EINES GETRÄNKS IN EINER GETRÄNKEHERSTELLUNGSMASCHINE**
METHOD FOR PRODUCING A PORTION CAPSULE FOR PREPARING A BEVERAGE IN A BEVERAGE PRODUCTION MACHINE
PROCÉDÉ POUR FABRIQUER UNE CAPSULE POUR LA PRÉPARATION D'UNE BOISSON DANS UNE MACHINE DE FABRICATION DE BOISSON

(30) Priorität: 27.07.2018 DE 102018118241
(43) Veröffentlichungstag der Anmeldung: 09.06.2021
(73) Patentinhaber: GCS German Capsule Solution GmbH, 51469 Bergisch Gladbach (DE)
(72) Erfinder: KRÜGER, Marc, 51467 Bergisch Gladbach (DE); EMPL, Günter, 51429 Bergisch Gladbach (DE)
(74) Vertreter: Kutzenberger Wolff & Partner
(86) Internationale Anmeldenummer: PCT/EP2019/069445
(87) Internationale Veröffentlichungsnummer: WO 2020/020756

(56) Entgegenhaltungen:
- WO-A1-2016/041596
- WO-A2-2019/149875
- DE-A1-102008 014 758
- DE-T2-602004 007 880

## Beschreibung

### Stand der Technik

Die vorliegende Erfindung geht aus von einem Verfahren zur Herstellung einer Portionskapsel, wobei in einem ersten Schritt ein Basiselement, aufweisend einen Kapselboden, eine den Kapselboden umlaufende Kapselwand und einen die Kapselwand umlaufenden Flansch, in einem Umformverfahren hergestellt wird, wobei in einem zweiten Schritt ein Getränkerohmaterial in einen von dem Kapselboden und der Kapselwand umrandeten Kapselinnenraum gefüllt wird, wobei in einem dritten Schritt ein den Kapselinnenraum verschließender Kapseldeckel an dem Flansch befestigt wird.

Herstellungsverfahren für solche Portionskapseln und solche Portionskapseln selbst sind aus dem Stand der Technik bekannt. So offenbart beispielsweise die Druckschrift DE 10 2013 215 274 A1 Portionskapseln für Portionskapselmaschinen aufweisend jeweils ein starres oder halbstarres Basiselement, das einen Kapselinnenraum zur Aufnahme eines Getränkerohmaterials, wie Kaffeeröstgranulat, Instantkaffee, Schokoladenpulver, Teeverschnitt, Milchpulver oder dergleichen, umschließt, wobei der Kapselinnenraum nach dem Befüllen der Portionskapsel mit einem Kapseldeckel verschlossen wird. Damit das Getränkerohmaterial bei der Lagerung und beim Transport der Portionskapsel sein Aroma nicht verliert, ist das Basiselement gas- und flüssigkeitsdicht ausgebildet.

Für die Zubereitung eines Kaffeegetränkes wird üblicherweise die Portionskapsel in eine Brühkammer eines Zubereitungsgerätes eingebracht und an einer ersten Seite und an einer zweiten Seite geöffnet. Anschließend wird Zubereitungsflüssigkeit, vorzugsweise heißes Wasser, unter Druck durch die erste Seite in die Portionskapsel gefördert. Die Zubereitungsflüssigkeit durchströmt das Getränkerohmaterial und extrahiert und/oder löst die für die Getränkeherstellung benötigten Stoffe aus dem Getränkerohmaterial, bevor sie an der zweiten Seite als Getränk wieder austritt.

Das Basiselement muss bei der Herstellung des Getränks vergleichsweise hohen mechanischen Kräften standhalten, da die Zubereitungsflüssigkeit unter hohem Druck und mit hoher Temperatur in den Kapselinnenraum eingeleitet wird, um unter Wechselwirkung mit dem Getränkerohmaterial das Getränk zu erzeugen. Dabei muss verhindert werden, dass Zubereitungsflüssigkeit an dem Basiselement vorbei in die Brühkammer gelangt und diese verunreinigt oder sogar beschädigt.

Zur Abdichtung offenbaren beispielsweise die Druckschriften WO 2013 / 046 014 A1, WO 2014 / 167 526 A1 und EP 2 872 421 B1 zackenförmige umlaufende massive Bereiche mit erhöhter Materialdicke am Flansch des Basiselementes. Diese Bereiche werden während der Getränkezubereitung gegen einen Gegenbereich der Maschine gepresst und gequetscht. Es hat sich gezeigt, dass diese Art der Abdichtung sehr empfindlich auf Unebenheiten am Gegenbereich reagiert. Ferner ist die Herstellung solcher Bereiche nicht mit allen Materialien problemlos möglich. Bevorzugte Materialien sind beispielsweise Metalle, insbesondere Aluminiumgemische, bei denen sich Materialverdickungen im Formprozess nicht ohne weiteres umsetzen lassen.

Die Druckschriften EP 2 757 056 A1 und WO 2016 / 041 596 A1 offenbaren eine eingepresste Rinne beziehungsweise eine eingepresste Zick-Zack-Struktur zum Abdichten. Zwar können diese Kapseln aus einer Vielzahl von Materialien, einschließlich Aluminiumgemischen, hergestellt werden, problematisch ist beim Stand der Technik hier jedoch die Befestigung der die Portionskapsel verschließenden flanschseitigen Wand, beziehungsweise des Kapseldeckels. Das Getränkerohmaterial im Inneren der Portionskapsel emittiert Gase, was zu einem Anstieg des Drucks in der Portionskapsel während deren Lagerung zwischen Herstellung der Portionskapsel und Getränkezubereitung führt. Um diesem Druck standzuhalten muss der Kapseldeckel sicher und dicht befestigt sein. Im Stand der Technik ist dem schon dadurch Grenzen gesetzt, dass die eingepresste Rinne beziehungsweise die eingepresste Zick-Zack-Struktur nicht als Befestigungsfläche zum Befestigen des Kapseldeckels dienen können. Als Maßnahme zur Verbesserung sieht die Druckschrift EP 2757 056 A1 einen Befestigungsbereich zwischen der Zick-Zack-Struktur und der Portionskapselwand vor. Aufgrund der großen räumlichen Ausdehnung und der praktikablen Gestaltung des Flansches ist aber auch dem Grenzen gesetzt und bietet keine zufriedenstellende Befestigungsmöglichkeit.

### Offenbarung der Erfindung

Es ist eine Aufgabe der vorliegenden Erfindung ein Verfahren zur Herstellung einer Portionskapsel der eingangs genannten Art zur Verfügung zu stellen, welches eine einfache und kostengünstige Möglichkeit bietet, Portionskapseln mit sicher verschlossenem Kapselinnenraum zu produzieren.

Die Aufgabe der vorliegenden Erfindung wird gelöst mit einem Verfahren zur Herstellung einer Portionskapsel, wobei in einem ersten Schritt ein Basiselement, aufweisend einen Kapselboden, eine den Kapselboden umlaufende Kapselwand und einen die Kapselwand umlaufenden Flansch, in einem Umformverfahren hergestellt wird, wobei in einem zweiten Schritt ein Getränkerohmaterial in einen von dem Kapselboden und der Kapselwand umrandeten Kapselinnenraum gefüllt wird, wobei in einem dritten Schritt ein den Kapselinnenraum verschließender Kapseldeckel an dem Flansch befestigt wird, dadurch gekennzeichnet, dass nach dem dritten Schritt eine die Kapselwand umlaufende Sicke in den Flansch eingeprägt wird.

Das erfindungsgemäße Verfahren ermöglicht das besonders einfache und kostengünstige Herstellen einer Portionskapsel. Das Einprägen der Sicke nach dem Befüllen des Kapselinnenraums mit dem Getränkerohmaterial bietet die vorteilhafte Möglichkeit, zwischen dem Einprägen der Sicke und dem Versiegeln das Basiselement nicht mehr bewegen zu müssen. Weiterhin ist es vorteilhaft möglich, beim Einprägen der Sicke den Flansch von Getränkerohmaterial zu reinigen und so für das Aufbringen des Kapseldeckels vorzubereiten. Schließlich ist es möglich, die Sicke direkt beim Aufbringen des Kapseldeckels einzuprägen, was zu einer hohen Genauigkeit der Anordnung von Sicke und Kapseldeckel und zu einem reduzierten Aufwand in der Fertigung führt und was damit die Fertigungskosten einer Portionskapsel senkt.

Das erfindungsgemäße Verfahren zur Herstellung einer Portionskapsel ermöglicht es ferner, eine Portionskapsel herzustellen, die gegenüber dem Stand der Technik den Vorteil, dass ein Eindringen von Zubereitungsflüssigkeit in die Brühkammer der Getränkeherstellungsmaschine wirksam verhindert wird, dass zur Herstellung Aluminium, Aluminiumgemische, andere Metalle oder Metallgemische verwendet werden können und dass der Kapseldeckel an ausreichend viel Fläche am Flansch befestigt wird. Wirksam verhindert bedeutet im Sinne der vorliegenden Erfindung, dass erreicht wird, dass zumindest nur so wenig Zubereitungsflüssigkeit in die Brühkammer der Getränkeherstellungsmaschine gelangt, dass die Funktion der Getränkeherstellungsmaschine durch die in die Brühkammer eindringende Zubereitungsflüssigkeit im Wesentlichen nicht beeinträchtigt wird.

Die umlaufende Sicke wird nach dem Einlegen der Portionskapsel in die Getränkeherstellungsmaschine beim Schließen der Brühkammer so gepresst, dass sie eine im Wesentlichen flüssigkeitsdichte Abdichtung bildet. Flüssigkeitsdichte Abdichtung bedeutet im Sinne der vorliegenden Erfindung, dass die Abdichtung im Normalbetrieb der Getränkeherstellungsmaschine im Wesentlichen undurchlässig für Flüssigkeitsmengen ist, welche geeignet wären, die Funktion der Getränkeherstellungsmaschine zu stören. Die Sicke wird als eine durchgehende Rinne eingeprägt, welche der Form des Flansches angepasst, vorzugsweise kreisförmig, den Flansch umläuft. Die so hergestellte Abdichtung ist bei Drücken zwischen 0,5 bar und 50 bar, vorzugsweise zwischen 2 bar und 25 bar, besonders bevorzugt zwischen 5 bar und 20 bar, insbesondere zwischen 6 bar und 18 bar und bei Temperaturen zwischen 0°C und 100°C, bevorzugt zwischen 20°C und 100°C, besonders bevorzugt zwischen 40°C und 100°C, insbesondere zwischen 55°C und 100°C flüssigkeitsdicht. In den genannten Bereichen ist die Abdichtung ferner bevorzugt dampfdicht. Dampfdichte Abdichtung bedeutet im Sinne der vorliegenden Erfindung, dass die Abdichtung im Normalbetrieb der Getränkeherstellungsmaschine im Wesentlichen undurchlässig für Flüssigkeitsmengen ist, welche geeignet wären, die Funktion der Getränkeherstellungsmaschine zu stören.

Denkbar ist, das Basiselement aus einem Kunststoff, einem Metall oder einem Kunststoff-Metall-Gemisch oder aus einer Mehrzahl von Lagen, welche jeweils aus einem Metall, einem Kunststoff oder einem Metall-Kunststoff-Gemisch gefertigt sind, herzustellen, wobei das Material insbesondere ein Aluminiummaterial ist.

Denkbar ist weiterhin, den Kapseldeckel aus einem Kunststoff, einem Metall oder einem Kunststoff-Metall-Gemisch oder aus einer Mehrzahl von Lagen, welche jeweils aus einem Metall, einem Kunststoff oder einem Metall-Kunststoff-Gemisch gefertigt sind, herzustellen. Vorzugsweise wird der äußere Rand des Flansches zu einer Verdickung verformt. Damit ist in vorteilhafter Weise ein Verletzungsschutz realisiert, welcher verhindert, dass es am sonst eventuell scharfen Rand des Flansches zu Schnittverletzungen kommt. Weiterhin bietet die Verdickung die Möglichkeit, die Portionskapsel bei der Herstellung und/oder beim Transport und/oder bei der Verpackung und/oder während der Verwendung zu führen oder zu zentrieren. Besonders bevorzugt wird die Verdickung so geformt, dass diese den Kapseldeckel im dritten Schritt auf dem Basiselement zentriert. Dazu ist denkbar, dass der Kapseldeckel im dritten Schritt innerhalb einer durch die Verdickung umrandete Fläche platziert wird. Denkbar ist, dass die Verdickung ein aufgerollter Rollrand ist. Der Rollrand kann so aufgerollt werden, dass dieser im Wesentlichen unter der Haupterstreckungsebene des Kapseldeckels angeordnet ist. Alternativ dazu kann der Rollrand auch so aufgerollt werden, dass dieser im Wesentlichen über der Haupterstreckungsebene des Kapseldeckels angeordnet ist. Alternativ dazu kann der Rollrand auch so aufgerollt werden, dass die Haupterstreckungsebene des Kapseldeckels den Rollrand schneidet.

Denkbar ist, dass der Kapseldeckel zumindest teilweise an der Sicke und zumindest teilweise am Flansch außerhalb der Sicke befestigt wird. Bevorzugt wird der Kapseldeckel vollflächig an der Sicke befestigt, also so, dass er an der gesamten dem Kapseldeckel zugewandten Oberfläche der Sicke befestigt ist. Vorstellbar ist aber auch, dass der Kapseldeckel nur an Teilen der Sicke befestigt wird. Weiterhin wäre denkbar, dass der Kapseldeckel nur an einem Teil der Sicke befestigt wird, der ein Boden der Sicke ist.

Die Portionskapsel wird bevorzugt kegelstumpfförmig oder zylinderförmig gefertigt. Der durch die Kapselwand, den Kapselboden und den Kapseldeckel gebildete Kapselinnenraum dient der Aufnahme von Getränkerohmaterial, beispielsweise Kaffeeröstgranulat, Instantkaffee, Schokoladenpulver, Teeverschnitt, Milchpulver oder dergleichen. Das Getränkerohmaterial wird im zweiten Schritt in den Kapselinnenraum eingefüllt.

Vorzugsweise wird zwischen dem ersten Schritt und dem zweiten Schritt ein Vlies, ein Filz oder ein anderer Filter in den Kapselinnenraum eingebracht.

Ferner ist denkbar, dass die Portionskapsel so gefertigt wird, dass der Kapselboden geöffnet werden kann, durch den Kapselboden unter Druck die Zubereitungsflüssigkeit in den Kapselinnenraum fließen kann, welche den Kapseldeckel zum Äußeren der Portionskapsel hin elastisch oder unelastisch dehnt und der Kapseldeckel so gefertigt wird, dass er durch die Dehnung gegen ein Öffnungselement gepresst und dadurch von diesem geöffnet wird und die Zubereitungsflüssigkeit durch den geöffneten Kapseldeckel ausfließen kann.

Gemäß einer bevorzugten Ausführungsform der vorliegenden Erfindung ist vorgesehen, dass im ersten Schritt das Basiselement mittels eines Thermoformverfahrens, eines Druckumformverfahrens, eines Zugdruckumformverfahrens, eines Zugumformverfahrens, eines Einkomponenten- oder Mehrkomponenten-Spritzgussverfahrens und/oder eines In-Mold-Verfahren, bevorzugt aus einem Aluminiummaterial mittels Urformen oder Umformen, insbesondere mittels Warmverformen oder Kaltverformen, hergestellt wird.

Die genannten Verfahren sind sicher beherrschbar, günstig in der Anwendung und eignen sich vorzüglich zur Herstellung des Basiselements.

Gemäß einer weiteren bevorzugten Ausführungsform der vorliegenden Erfindung ist vorgesehen, dass zumindest das Basiselement zumindest während Teilen der Herstellung in einer Aufnahme angeordnet wird. Dies erhöht in vorteilhafter Weise die Wiederhohlgenauigkeit und die Präzision des Verfahrens zur Herstellung. Denkbar ist, dass die Aufnahme aus einem Metall besteht. Denkbar ist aber auch, dass die Aufnahme aus einem Kunststoff besteht.

Vorzugsweise wird die Portionskapsel nach der Herstellung von einem Auswerfer der Aufnahme aus der Aufnahme ausgeworfen. Denkbar ist, dass der Auswerfer durch einen Luftstrom gebildet wird, der die Kapsel am Kapselboden erfasst und aus der Aufnahme wirft. Denkbar ist aber auch, dass der Auswerfer ein beweglicher Teil der Aufnahme ist, welcher vorzugsweise im Bereich des Kapselbodens oder im Bereich des Flansches angebracht ist.

Denkbar ist weiterhin, dass das Auswerfen der Portionskapsel nach der Herstellung durch Umdrehen der Aufnahme geschieht.

Gemäß einer weiteren bevorzugten Ausführungsform der vorliegenden Erfindung ist vorgesehen, dass die Aufnahme für das Umformverfahren als Form genutzt wird. Dazu ist die Aufnahme zumindest teilweise der Form der Portionskapsel angepasst.

Gemäß einer weiteren bevorzugten Ausführungsform der vorliegenden Erfindung ist vorgesehen, dass durch die Aufnahme für das Umformverfahren Wärme abgegeben wird. Dies ermöglicht einen geschickten und direkten Wärmeeintrag zum Beispiel für Thermoformverfahren.

Gemäß einer weiteren bevorzugten Ausführungsform der vorliegenden Erfindung ist vorgesehen, dass der dritte Schritt durch Laserschweißen durchgeführt wird. Dadurch wird es vorteilhaft ermöglicht, den Kapseldeckel mit einer berührungslosen Technik mit hoher Genauigkeit und Qualität zu befestigen. Vorstellbar ist, dass im dritten Schritt zuerst der Kapseldeckel auf den Flansch aufgelegt wird und der Kapseldeckel die Sicke überspannt und nicht oder nur teilweise in die Sicke hineinragt und dann durch Hitzeeintrag durch das Laserschweißen der Kapseldeckel zumindest im Bereich der Sicke so elastisch wird, dass der Kapseldeckel in die Sicke einsinkt und dann in der Sicke an der Sicke befestigt werden kann.

Gemäß einer weiteren bevorzugten Ausführungsform der vorliegenden Erfindung ist vorgesehen, dass der dritte Schritt durch Siegeln mit einem Siegelstempel mit einer Sickenausbuchtung durch Einbringen von Wärme oder durch Ultraschallsiegeln durchgeführt wird. Das Befestigen durch das Einbringen von Wärme oder durch Ultraschallsiegeln ist verlässlich, günstig und schnell. Durch den mechanischen Eingriff durch die Sickenausbuchtung ist es vorteilhaft möglich, die Sicke und oder das Basiselement im zweiten Schritt mechanisch zu manipulieren. Vorzugsweise wird ein Siegelstempel mit einer Sickenausbuchtung verwendet, welche in Größe und Form komplementär zur Sicke geformt ist, so dass die Sickenausbuchtung in die Sicke einfährt und zumindest teilweise flächig oder vollflächig den Kapseldeckel an die Wände der Sicke drückt und den Kapseldeckel zumindest teilweise oder vollflächig in der Sicke befestigt. Denkbar ist aber auch, dass ein Siegelstempel mit einer Sickenausbuchtung verwendet wird, welche in Größe und Form so geformt ist, dass die Sickenausbuchtung in die Sicke einfährt und nur teilweise flächig den Kapseldeckel an die Wände der Sicke drückt und diesen in der Sicke nur teilweise befestigt.

Gemäß einer weiteren bevorzugten Ausführungsform der vorliegenden Erfindung ist vorgesehen, dass der Kapseldeckel von der Sickenausbuchtung durch mindestens eine durch Siegeln des Kapseldeckels an den Flansch hergestellte Siegelnaht im Bereich der Sicke befestigt wird. Dies ermöglicht in vorteilhafter Weise einen günstigen und präzisen Herstellungsprozess mit einer hohen Wiederhohlgenauigkeit und eine sichere Verbindung des Kapseldeckels mit dem Flansch.

Gemäß einer weiteren bevorzugten Ausführungsform der vorliegenden Erfindung ist vorgesehen, dass die Siegelnaht im Bereich der Sicke vollflächig oder an zumindest Teilen des Bodens der Sicke und/oder einer Wand der Sicke hergestellt wird. Dies ermöglicht die unkomplizierte Nutzung eines Werkzeugs zum Siegeln, beispielsweise einer Sonotrode, wobei die Form des Werkzeugs nicht mit der Form der Sicke übereinstimmen muss.

Gemäß einer weiteren bevorzugten Ausführungsform der vorliegenden Erfindung ist vorgesehen, dass das Basiselement und der Siegelstempel durch Einführen der Sickenausbuchtung des Siegelstempels in die Sicke in einer Ebene parallel zur Haupterstreckungsebene des Kapseldeckels relativ zueinander ausgerichtet werden. Bei der Fertigung der Portionskapseln, insbesondere beim Befestigen des Kapseldeckels kommt es auf eine hohe Genauigkeit an. Die in die Sicke eintauchende Sickenausbuchtung richtet durch Kontakt mit den Seiten der Sicke die Sicke und die Sickenausbuchtung relativ zu einander aus. Denkbar ist, dass das dadurch geschieht, dass die in die Sicke einfahrende Sickenausbuchtung durch eine in Einfahrrichtung zumindest teilweise keilartige oder spitze Form das Basiselement in die richtige Position schiebt. Denkbar ist aber auch, dass die Seiten der Sicke relativ zur Einfahrrichtung der Sickenausbuchtung so geneigt sind, dass sich das Basiselement oder der Siegelstempel in die richtige Position schiebt. Vorteilhaft vorgesehen ist, dass dafür das Basiselement und/oder der Siegelstempel in einer Ebene parallel zur Haupterstreckungsebene des Kapseldeckels zur Ausrichtung des Basiselementes und des Siegelstempels relativ zueinander frei beweglich sind. Denkbar ist aber auch, dass das Basiselement dabei festgehalten und der Siegelstempel, welcher in einer Ebene parallel zur Haupterstreckungsebene des Kapseldeckels frei beweglich gelagert ist, in die zum Siegeln vorgesehene Position geschoben wird.

Gemäß einer weiteren bevorzugten Ausführungsform der vorliegenden Erfindung ist vorgesehen, dass das Basiselement in einer Ebene parallel zur Haupterstreckungsebene des Kapseldeckels zur Ausrichtung des Basiselementes und des Siegelstempels relativ zueinander frei beweglich ist. Dies ermöglicht ein kontrolliertes und genaues Siegeln des Kapseldeckels.

Gemäß einer weiteren bevorzugten Ausführungsform der vorliegenden Erfindung ist vorgesehen, dass das Basiselement in mechanische Schwingung versetzt wird. Dies erleichtert das Ausrichten des Basiselements.

Gemäß einer weiteren bevorzugten Ausführungsform der vorliegenden Erfindung ist vorgesehen, dass die Sicke durch ein Umformverfahren durch Aufdrücken des Siegelstempels und insbesondere der Sickenausbuchtung hergestellt wird. Dies macht ein Ausrichten von Sicke und Siegelstempel relativ zueinander unnötig. Der Siegelstempel ist hier zum einen ein Werkzeug zum Umformen und zum anderen ein Werkzeug zum Befestigen. Denkbar ist, dass die Sicke durch ein Umformverfahren eines im ersten Schritt bereits vorgeformten Bereiches durch Aufdrücken des Siegelstempels und insbesondere der Sickenausbuchtung hergestellt wird.

Ein weiterer Gegenstand der vorliegenden Erfindung ist eine Portionskapsel zur Zubereitung eines Getränks in einer Getränkeherstellungsmaschine, wobei die Portionskapsel ein Basiselement aufweist, wobei die Portionskapsel einen Kapselinnenraum zum Aufnehmen eines Getränkerohmaterials aufweist, wobei der Kapselinnenraum von einem Kapselboden des Basiselements, einer den Kapselboden umlaufenden Kapselwand des Basiselements, und einem Kapseldeckel verschlossen ist, wobei der Kapseldeckel zumindest teilweise an einem die Kapselwand umlaufenden Flansch des Basiselements befestigt ist, wobei der Flansch eine umlaufende Sicke aufweist, wobei der Kapseldeckel zumindest teilweise im Bereich der Sicke am Flansch befestigt ist, dadurch gekennzeichnet, dass die Fläche der Sicke mindestens der Hälfte der Fläche des Flansches entspricht.

Die erfindungsgemäße Portionskapsel hat gegenüber dem Stand der Technik den Vorteil, dass die Sicke in der erfindungsgemäßen Form ein im Vergleich zum Stand der Technik deutlich vereinfachtes Herstellungsverfahren im Hinblick auf die Befestigung des Kapseldeckels bietet. Zudem hat sich gezeigt, dass die Befestigung des Kapseldeckels an der erfindungsgemäß geformten Sicke im Vergleich zum Stand der Technik sicherer und belastbarer ist. Weiterhin wird ermöglicht, dass ein Eindringen von Zubereitungsflüssigkeit in die Brühkammer der Getränkeherstellungsmaschine wirksam reduziert wird, zur Herstellung Aluminium, Aluminiumgemische, andere Metalle oder Metallgemische verwendet werden können und ausreichend viel Platz zur Befestigung des Kapseldeckels bereitsteht. Die umlaufende Sicke wird nach dem Einlegen der Portionskapsel in die Getränkeherstellungsmaschine beim Schließen der Brühkammer so gepresst, dass sie eine flüssigkeitsdichte Abdichtung bildet. Die Sicke bildet eine durchgehende Rinne, welche der Form des Flansches angepasst, vorzugsweise kreisförmig, den Flansch umläuft.

Die Fläche der Sicke entspricht mindestens der Hälfte der Fläche des Flansches, vorzugsweise entspricht die Fläche der Sicke mehr als zwei Drittel der Fläche des Flansches, besonders bevorzugt entspricht die Fläche der Sicke mehr als drei Viertel der Fläche des Flansches, insbesondere entspricht die Fläche der Sicke mehr als vier Fünftel der Fläche des Flansches. Die Fläche der Sicke entspricht im Sinne der vorliegenden Erfindung der Fläche der Projektion der Sicke auf die Haupterstreckungsebene des Kapseldeckels. Die Fläche des Flansches entspricht im Sinne der vorliegenden Erfindung der Fläche der Projektion des Flansches auf die Haupterstreckungsebene des Kapseldeckels.

Die Abdichtung ist bei Drücken zwischen 0,5 bar und 50 bar, vorzugsweise zwischen 2 bar und 25 bar, besonders bevorzugt zwischen 5 bar und 20 bar, insbesondere zwischen 6 bar und 18 bar und bei Temperaturen zwischen 0°C und 100°C, bevorzugt zwischen 20°C und 100°C, besonders bevorzugt zwischen 40°C und 100°C, insbesondere zwischen 55°C und 100°C flüssigkeitsdicht. In den genannten Bereichen ist die Abdichtung ferner bevorzugt dampfdicht. Der Kapseldeckel ist zumindest teilweise am Flansch befestigt, insbesondere ist der Kapseldeckel aber auch teilweise an der Sicke befestigt. Bevorzugt ist der Kapseldeckel vollflächig an der Sicke befestigt, vorstellbar ist aber auch, dass der Kapseldeckel nur an Teilen der Sicke befestigt ist.

Denkbar wäre, dass der Kapseldeckel nur an einem dem Teil der Sicke befestigt ist, welcher näher an einem durch den Flansch definierten Mittelpunkt des Flansches liegt. Der Mittelpunkt des Flansches ist dabei der Massenschwerpunkt des Flansches. Denkbar wäre aber auch, dass der Kapseldeckel nur an einem Teil der Sicke befestigt ist, welcher weiter weg vom Mittelpunkt des Flansches liegt. Weiterhin wäre denkbar, dass der Kapseldeckel nur an einem Teil der Sicke befestigt ist, der der Teil der Sicke ist, der in einer Richtung orthogonal zur Haupterstreckungsebene des Kapseldeckels am weitesten von der Haupterstreckungsebene des Kapseldeckels entfernt ist.

Vorzugsweise ist der äußere Rand des Flansches zu einer Verdickung verformt. Damit ist in vorteilhafter Weise eine weitere Abdichtung realisiert.

Denkbar ist, dass das Basiselement aus einem Kunststoff, einem Metall oder einem Kunststoff-Metall-Gemisch oder aus einer Mehrzahl von Lagen, welche jeweils aus einem Metall, einem Kunststoff oder einem Metall-Kunststoff-Gemisch gefertigt sind, besteht.

Denkbar ist weiterhin, dass der Kapseldeckel aus einem Kunststoff, einem Metall oder einem Kunststoff-Metall-Gemisch oder aus einer Mehrzahl von Lagen, welche jeweils aus einem Metall, einem Kunststoff oder einem Metall-Kunststoff-Gemisch gefertigt sind, besteht, wobei das Metall insbesondere ein Aluminiummaterial ist.

Der Kapseldeckel ist vorzugsweise durch Ultraschallsiegeln oder Heißsiegeln oder Laserschweißen befestigt.

Die Portionskapsel ist bevorzugt kegelstumpfförmig oder zylinderförmig ausgeführt. Der durch das Basiselement gebildete Kapselinnenraum dient der Aufnahme von Getränkerohmaterial, beispielsweise Kaffeeröstgranulat, Instantkaffee, Schokoladenpulver, Teeverschnitt, Milchpulver oder dergleichen.

Vorzugsweise weist die Portionskapsel im Kapselinnenraum ein Vlies, ein Filz oder einen anderen Filter auf.

Denkbar ist, dass der Kapseldeckel geeignet ist, von einem Öffnungselement außerhalb der Portionskapsel geöffnet zu werden. Weiterhin ist denkbar, dass der Kapseldeckel geeignet ist, durch Druck im Kapselinnenraum der Portionskapsel elastisch oder unelastisch gedehnt zu werden. Ferner ist denkbar, dass der Kapseldeckel geeignet ist, durch Druck, welcher beim Einleiten von Zubereitungsflüssigkeit in den Kapselinnenraum entsteht, elastisch oder unelastisch so gedehnt zu werden, dass der Kapseldeckel das Öffnungselement mit Druck so berührt, dass das Öffnungselement des Kapseldeckel öffnet. Das Öffnungselement ist vorzugsweise eine Reliefstruktur mit einer Mehrzahl von Spitzen, wobei die Spitzen in Richtung des Kapseldeckels zeigen. Denkbar ist, dass das Öffnungselement den Kapseldeckel an einer oder an einer Vielzahl von Stellen durchsticht und den Kapseldeckel so flüssigkeitsdurchgängig öffnet. Ferner ist denkbar, dass die Portionskapsel dazu geeignet ist, am Kapselboden geöffnet zu werden, durch den Kapselboden unter Druck eine Zubereitungsflüssigkeit in den Kapselinnenraum fließen zu lassen, der Kapseldeckel geeignet ist, vom Druck der Zubereitungsflüssigkeit zum Öffnen des Kapseldeckels gegen das Öffnungselement gedrückt zu werden und die Zubereitungsflüssigkeit durch den geöffnete Kapseldeckel ausfließen zu lassen.

Gemäß einer bevorzugten Ausführungsform der vorliegenden Erfindung ist vorgesehen, dass der Kapseldeckel zumindest im Bereich der Sicke zumindest teilweise mit einer Siegelnaht am Flansch befestigt ist. Eine Siegelnaht ist eine sichere und haltbare Verbindung und dabei günstig, schnell und sehr präzise aufbringbar. Denkbar ist, dass die Siegelnaht durch Ultraschallsiegeln mit einer Sonotrode hergestellt ist. Weiterhin ist denkbar, dass die Siegelnaht durch das Einbringen von Wärme durch Thermosiegeln hergestellt ist.

Gemäß einer weiteren bevorzugten Ausführungsform der vorliegenden Erfindung ist vorgesehen, dass die Siegelnaht im Bereich der Sicke vollflächig im gesamten Bereich der Sicke oder an einer oder mehreren Stellen im Bereich der Sicke angeordnet ist. Damit ist gewährleistet, dass auch bei ungünstigen Sickengeometrien der Kapseldeckel mit einer Siegelnaht im Bereich der Sicke am Flansch befestigt sein kann.

Gemäß einer weiteren bevorzugten Ausführungsform der vorliegenden Erfindung ist vorgesehen, dass die Siegelnaht zumindest teilweise an einem Boden der Sicke angeordnet ist, wobei der Boden der Sicke der Teil der Sicke ist, in welchem der Flansch am weitesten von der Haupterstreckungsebene des Kapseldeckels entfernt ist, und/oder die Siegelnaht zumindest teilweise an einer oder mehreren Wänden der Sicke angeordnet ist, wobei eine Wand der Sicke der Teil der Sicke ist, an dem der Flansch winkelig zur Haupterstreckungsebene des Kapseldeckels angeordnet ist. Damit ist es in vorteilhafter Weise möglich, dass die Siegelnaht mit einem Werkzeug aufgesiegelt ist, welches in seiner Form nicht der Form der Sicke entspricht, das Herstellungsverfahren also vereinfacht wird.

Gemäß einer weiteren bevorzugten Ausführungsform der vorliegenden Erfindung ist vorgesehen, dass die Sicke in die Richtung vom Kapseldeckel weg ausgeformt ist. Das heißt, dass die Sicke eine Rinne bildet, wobei der Boden der Sicke auf der Seite der Haupterstreckungsebene des Kapseldeckels liegt, die dem Kapselboden zugewandt ist

Gemäß einer weiteren bevorzugten Ausführungsform der vorliegenden Erfindung ist vorgesehen, dass die Sicke in einer Schnittebene, wobei die Schnittebene senkrecht auf der Haupterstreckungsebene des Kapseldeckels steht und den Kapselboden in dessen Mittelpunkt schneidet, einen mehreckigen, bevorzugt einen rechteckigen, einen trapezförmigen, einen quadratischen oder einen dreieckigen Querschnitt oder einen kreissegmentigen oder einen ovalsegmentigen Querschnitt aufweist. Ein rechteckiger oder quadratischer Querschnitt bietet den Vorteil, dass am Boden der Sicke viel Fläche zum Befestigen des Kapseldeckels parallel zur Haupterstreckungsebene des Kapseldeckels vorhanden ist. Ein abgerundeter, also kreissegmentiger oder ovalsegmentiger, Querschnitt ermöglicht die Ausbildung der Sicke mit verhältnismäßig wenig Materialeinsatz. Ein dreieckiger oder trapezförmiger Querschnitt ermöglicht es in vorteilhafter Weise, das Basiselement während der Herstellung der Portionskapsel beim Befestigen des Kapseldeckels durch das mechanische Einführen des Kapseldeckels und/oder einer Befestigungsvorrichtung in die Sicke auszurichten.

Denkbar ist, dass die Wände der Sicke und/oder der Boden der Sicke parallel, orthogonal und/oder schräg zur Haupterstreckungsebene des Kapseldeckels ausgerichtet sind.

Denkbar ist, dass die Sicke eine Tiefe von 0,2 mm bis 5 mm, bevorzugt 0,5 mm bis 3 mm, besonders bevorzugt circa 2 mm aufweist. Tiefe ist hier so zu verstehen, dass die Tiefe die Ausdehnung in eine Richtung orthogonal zur Haupterstreckungsebene des Kapseldeckels ist.

Ferner ist denkbar, dass die Wände der Sicke einen Winkel zur Flächennormalen auf der Haupterstreckungsebene des Kapseldeckels von 20° bis 160°, bevorzugt 45° bis 110°, besonders bevorzugt circa 60° aufweisen.

Gemäß einer weiteren bevorzugten Ausführungsform der vorliegenden Erfindung ist vorgesehen, dass der Kapseldeckel zumindest im Bereich der Sicke unelastisch dehnbar ist. Dadurch ist es möglich, dass der Kapseldeckel in der Sicke befestigt ist, ohne dass dadurch Spannungen im Material des Kapseldeckels entstehen.

Gemäß einer weiteren bevorzugten Ausführungsform der vorliegenden Erfindung ist vorgesehen, dass die Sicke derart vorgesehen ist, dass unter Druck die Form und/oder das Volumen der Sicke veränderlich ist. Dies ermöglicht in vorteilhafter Weise, dass sich beim Abdichten die Form der Sicke der Struktur des Teils anpasst, gegen welches sie gedrückt wird. Dadurch können Ungenauigkeiten an der Sicke oder Teilen der Getränkeherstellungsmaschine ausgeglichen und eine höhere Dichtigkeit erzielt werden.

Gemäß einer weiteren bevorzugten Ausführungsform der vorliegenden Erfindung ist vorgesehen, dass die Portionskapsel und/oder der Kapseldeckel wenigstens teilweise aus einem Aluminiummaterial gefertigt sind. Aluminium ist geeignet, hohe Temperaturen und hohe Drücke auszuhalten. Es lässt sich leicht verarbeiten und schützt den Inhalt der Portionskapsel ausgezeichnet zum Beispiel gegen schädliche Umwelteinflüsse wie Sonneneinstrahlung, gegen Austrocknen, gegen Feuchtigkeit, gegen Verunreinigungen oder gegen Kontamination durch Bakterien oder Keime.

Ein weiterer Gegenstand der vorliegenden Erfindung ist ein Verfahren zur Herstellung eines Getränks mit einer Getränkezubereitungsmaschine, die eine Brühkammer aufweist, und einer in der Brühkammer anordenbaren Portionskapsel nach einem der Ansprüche 16 bis 24, wobei die Brühkammer aus einem ersten Brühkammerteil und einem zweiten Brühkammerteil gebildet ist, wobei zur Herstellung des Getränks das erste Brühkammerteil und das zweite Brühkammerteil aus einer Ladestellung relativ zueinander in eine Betriebsstellung überführt werden, wobei das erste Brühkammerteil in der Betriebsstellung derart mit der Sicke der Portionskapsel zusammenwirkt, dass eine fluiddichte Abdichtung erfolgt. Denkbar ist, dass die Sicke beim Überführen des ersten Brühkammerteils und des zweiten Brühkammerteils von der Ladestellung in die Betriebsstellung so deformiert wird, dass es eine fluiddichte Abdichtung bildet. Denkbar ist, dass zur Herstellung eines Getränks die Portionskapsel am Kapselboden geöffnet wird. Denkbar ist, dass dies mit einem Dorn oder einer Nadel geschieht. Weiterhin ist denkbar, dass durch den geöffneten Kapselboden, vorzugsweise durch einen Filz, ein Vlies oder einen anderen Filter, eine Zubereitungsflüssigkeit unter Druck in den Kapselinnenraum der Portionskapsel gepumpt wird. Denkbar ist weiterhin, dass die Zubereitungsflüssigkeit das Getränkerohmaterial im Kapselinnenraum der Portionskapsel durchströmt und die für die Getränkeherstellung benötigten Stoffe aus dem Getränkerohmaterial extrahiert und/oder löst. Vorzugsweise wird der Kapseldeckel vom Öffnungselement durch den Druck der zugeführten Zubereitungsflüssigkeit geöffnet und die Zubereitungsflüssigkeit strömt durch den geöffneten Kapseldeckel aus der Portionskapsel heraus. Denkbar ist, dass das Öffnungselement eine Reliefstruktur mit einer Mehrzahl von Spitzen besitzt und durch den Druck der in die Portionskapsel strömenden Zubereitungsflüssigkeit mit der Mehrzahl von Spitzen auf den Kapseldeckel wirkt, so dass dieser an einer Mehrzahl von Stellen aufgestochen wird.

Gemäß einer bevorzugten Ausführungsform der vorliegenden Erfindung ist vorgesehen, dass in der Betriebsstellung das erste Brühkammerteil die Sicke derart verformt, dass diese wenigstens an einer Stelle entlang des Radius des Flansches eine in Umfangsrichtung durchgehende fluiddichte Abdichtung bildet. Denkbar ist, dass die Form der Sicke die Verformung günstig beeinflusst, so dass diese mit nur geringem Kraftaufwand und/oder konstruktive Ungenauigkeiten ausgleichend geschieht.

### Kurze Beschreibung der Zeichnungen

- **Figur 1**: zeigt eine schematische Schnittbildansicht einer Portionskapsel gemäß einer beispielhaften Ausführungsform der vorliegenden Erfindung.
- **Figuren 2 (a)** - **(h)**: zeigen schematische Schnittbildteilansichten von Portionskapseln mit Sicken verschiedener Querschnitte gemäß einer weiteren beispielhaften Ausführungsform der vorliegenden Erfindung.
- **Figur 3**: zeigt schematisch den zweiten Schritt des Verfahrens zur Herstellung einer Portionskapsel gemäß einer weiteren beispielhaften Ausführungsform der vorliegenden Erfindung.
- **Figur 4**: zeigt eine schematische Schnittbildteilansicht einer Portionskapsel gemäß einer weiteren beispielhaften Ausführungsform der vorliegenden Erfindung.
- **Figuren 5 (a)** - **(c)**: zeigen schematisch einen Teil des zweiten Schrittes des Verfahrens zur Herstellung einer Portionskapsel gemäß einer weiteren beispielhaften Ausführungsform der vorliegenden Erfindung.

### Ausführungsformen der Erfindung

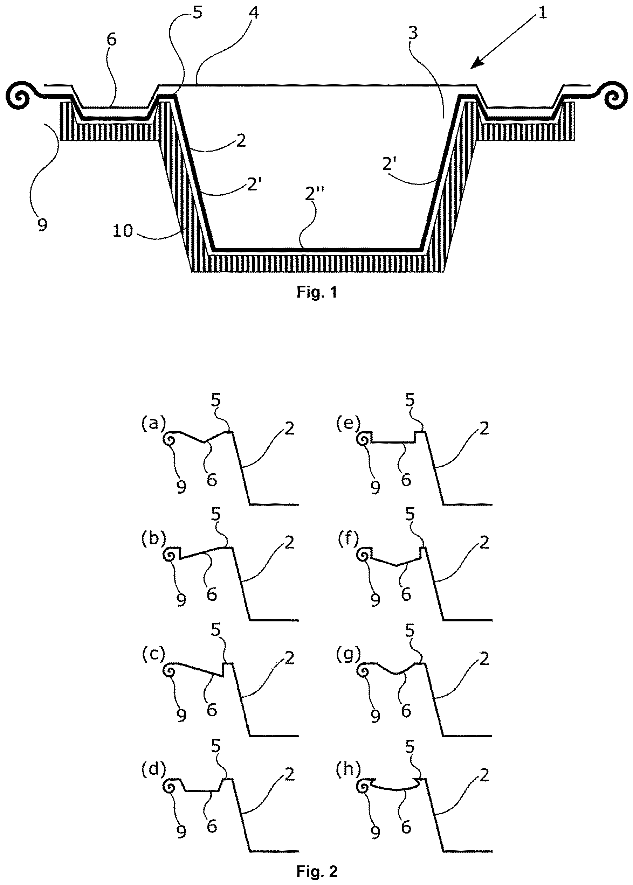

In **Figur 1** ist eine schematische Schnittbildansicht einer Portionskapsel 1 gemäß einer beispielhaften Ausführungsform der vorliegenden Erfindung dargestellt. Eine derartige Portionskapsel 1 wird zur Getränkeherstellung in speziellen Getränkezubereitungsmaschinen eingesetzt. Die Portionskapsel 1 umfasst einen hier im Wesentlichen das Basiselement 2, welches ein kegelstumpfförmiger Körper mit einem Kapselboden 2" im Bereich des geringsten Durchmessers, der Kapselwand 2' und einem offenen Ende am gegenüberliegenden Ende ist. Das offene Ende ist dabei vor Gebrauch durch einen Kapseldeckel 4, beispielsweise eine Membran, verschlossen, die an einem umlaufenden Flansch 5 der Portionskapsel 1 befestigt, insbesondere daran angesiegelt ist. Der Flansch 5 weist eine Sicke 6 auf, welche sich über mehr als die Hälfte der Fläche des Flansches erstreckt. Der Kapseldeckel 4 folgt dem Verlauf des Flansches 5 auch im Bereich der Sicke 6 und ist auch zumindest teilweise an dieser befestigt.

Vorliegend ist der Übersichtlichkeit halber der Kapseldeckel 4 mit einem etwas grösseren Durchmesser als der Flansch 5 dargestellt, allerdings kann der Durchmesser des Kapseldeckels 4 ebenso gut im Wesentlichen gleich groß wie der äußere Radius des Flansches 5 sein. Denkbar ist aber auch, dass der Durchmesser des Kapseldeckels 4 kleiner als der äußere Radius des Flansches 5 oder größer als der äußere Radius des Flansches 5 ist. Weiterhin ist der Übersichtlichkeit halber der Kapseldeckel 4 mit Abstand zum Flansch 5 und zur Sicke 6 dargestellt. Dies dient ausschließlich der besseren Erkennbarkeit der einzelnen Komponenten. Erfindungsgemäß ist der Kapseldeckel 4 zumindest teilweise am Flansch 5 und zumindest teilweise an der Sicke 6 befestigt.

Der Flansch 5 ist vorzugsweise einstückig mit dem Basiselement 2 gefertigt.

Innerhalb des Basiselements 2 ist ein Kapselinnenraum 3 ausgebildet, welcher mit Getränkerohmaterial befüllt ist (aus Gründen der Übersichtlichkeit ist dieses nicht illustriert) und welcher durch den Kapseldeckel 4, den Kapselboden 2" und die Kapselwand 2' verschlossen ist.

Das becherförmige Basiselement 2 ist vorzugsweise aus einem Aluminiummaterial durch Urformen oder Umformen, insbesondere Warmverformen oder Kaltverformen, hergestellt. In einer alternativen Ausführungsform ist vorgesehen, dass das Basiselement 2 als tiefgezogenes Kunststoffteil aus Polyethylen (PE), Polypropylen (PP), Polyvinylchlorid (PVC) oder Polyethylenterephthalat (PET) ausgebildet ist. In dieser Ausführungsform wird das Basiselement 2 vorzugsweise durch Thermoformen, beispielsweise Tiefziehen mittels Unterdruck, Überdruck und/oder einem beweglichen Stempel oder mittels eines Spritzgussverfahrens, insbesondere im Einkomponenten-, Mehrkomponenten- oder In-Mold-Verfahren, hergestellt.

Am äußeren Rand des Flansches 5 ist dieser zu einer Verdickung 9 geformt. Die Verdickung 9 ist ein Rollrand, dessen Mitte im gezeigten Ausführungsbeispiel von der Haupterstreckungsebene des Kapseldeckels 4 geschnitten wird.

Der Kapseldeckel 4 ist vorzugsweise aus einem Aluminiummaterial oder einem Kunststoff wie beispielsweise Polyethylen (PE), Polypropylen (PP), Polyvinylchlorid (PVC) oder Polyethylenterephthalat (PET) ausgebildet.

Die Befestigung des Kapseldeckels 4 am Flansch 5 und an der Sicke 6 erfolgt vorzugsweise durch Ultraschallsiegeln mit einer Ultraschallsonode eines Siegelstempels 8 (in Figur 1 aus Gründen der Übersichtlichkeit nicht dargestellt) oder mit Siegeln durch Einbringen von Wärme mit einen Siegelstempel 8. Denkbar ist auch, dass der Kapseldeckel 4 am Flansch 5 und an der Sicke 6 durch Laserschweißen befestigt ist.

Die Portionskapsel 1 liegt in der Aufnahme 10.

Die Portionskapsel 1 wird im Gebrauch in einer Getränkeherstellungsmaschine in eine Brühkammer eingeführt, die üblicherweise aus einem ersten, die Portionskapsel 1 umschließenden, Brühkammerteil und einem relativ zu dem ersten Brühkammerteil beweglichen zweiten Brühkammerteil besteht. Anschließend wird der Kapselboden von einem Öffnungselement der Brühkammer perforiert und durch die Perforationsöffnung im Kapselboden 2" Zubereitungsflüssigkeit unter Druck in den Kapselinnenraum 3 eingeleitet. Durch die Wechselwirkung zwischen der Zubereitungsflüssigkeit und dem Getränkerohmaterial entsteht das gewünschte Getränk. Der durch die eingeleitete Zubereitungsflüssigkeit entstehende Druck im Kapselinnenraum 3 drückt den Kapseldeckel 4 gegen ein weiteres Öffnungselement der Brühkammer, wodurch der Kapseldeckel 4 an einer Stelle oder an einer Mehrzahl von Stellen perforiert wird. Das Getränk verlässt die Portionskapsel 1 durch die Perforationsöffnungen im Kapseldeckel 4 und wird einem Getränkegefäß zugeführt wird. Optional sind das weitere Öffnungselement der Brühkammer und/oder der perforierte Kapseldeckel 4 geeignet, etwaige Partikel des Getränkerohmaterials aus dem Getränk zu filtern und in der Portionskapsel 1 zurückzuhalten. Um ein Austreten der Extraktionsflüssigkeit, insbesondere in den Bereich zwischen erstem Brühkammerteil und Flansch 5 zu verhindern, weist der Flansch 5 der Portionskapsel 1 die Sicke 6 auf, welche sich bei Schließen der Brühkammer deformiert und eine vorzugsweise in Umfangsrichtung der Portionskapsel 1 ununterbrochene Dichtung bildet.

**Figuren 2 (a)** - **(h)** zeigen schematische Schnittbildteilansichten von Portionskapseln 1 mit Sicken 6 verschiedener Querschnitte gemäß einer weiteren beispielhaften Ausführungsform der vorliegenden Erfindung. Dargestellt sind in Teilen das Basiselement 2, der Flansch 5, die Sicke 6, deren Fläche mehr als die Hälfte der Fläche des Flansches ist, und die Verdickung 9, in den hier gezeigten Ausführungsbeispielen ausgeführt als Rollrand, welcher im Wesentlichen unterhalb der Haupterstreckungsebene des Kapseldeckels 4 (hier nicht gezeigt) angeordnet ist. In **Figur 2(a)** ist eine Sicke 6 mit dreieckigem Querschnitt dargestellt. Dieser eignet sich besonders gut zum Versiegeln, da alle Flächen der Sicke 6 mit der Sickenausbuchtung 8' des Siegelstempels 8 (nicht dargestellt) gut zu erreichen sind. **Figur 2 (b)** zeigt eine Sicke 6 mit dreieckigem Querschnitt, wobei die äußere Seitenwand steiler als die innere Seitenwand geneigt ist. **Figur 2 (c)** zeigt eine Sicke 6 mit dreieckigem Querschnitt, wobei die innere Seitenwand steiler als die äußere Seitenwand geneigt ist. Durch eine Anpassung der Neigung der Seitenwände lässt sich das Verhalten der Sicke 6 bei der Deformation beim Schließen der Brühkammer und damit der Dichtigkeit der durch die Sicke 6 erfolgenden Abdichtung beeinflussen. **Figur 2 (d)** zeigt eine Sicke 6 mit trapezförmigem Querschnitt. Ein trapezförmiger Querschnitt bietet den Vorteil, dass durch die schräg stehenden Seitenwände die Sickenausbuchtung 8' des Siegelstempels 8 (nicht dargestellt) beim Einfahren in die Sicke 6 die Portionskapsel 1 zum Siegeln relativ zum Siegelstempel 8 zentrieren kann. Weiterhin bietet der trapezförmige Querschnitt eine große Fläche parallel zur Haupterstreckungsebene des Flansches 5, welche sich leicht Siegeln lässt. **Figur 2 (e)** zeigt eine Sicke 6 mit rechteckigem Querschnitt. Dieser Querschnitt bietet die meiste Fläche parallel zur Haupterstreckungsebene des Kapseldeckels 4 (siehe Figur 1) und damit die meiste Fläche, welche sich sehr einfach siegeln lässt. **Figuren 2 (f)** bis **(h)** zeigen weitere Sicken 6 mit fünfeckigem, kreissegmentigem oder ovalsegmentigem Querschnitt als weitere mögliche Ausführungsformen. Alle gezeigten Ausführungsformen besitzen verschieden Vorteile. So ist der fünfeckige Querschnitt, welcher in **Figur 2 (f)** gezeigt ist, geeignet, die Portionskapsel 1 beim Einführen der Sickenausbuchtung 8' des Siegelstempels 8 (nicht gezeigt) zu zentrieren und bietet dabei eine ähnliche Siegelfläche wie der in **Figur 2 (a)** gezeigte Querschnitt bei deutlich tieferer Sicke 6. Damit steht mehr Material zur Verformung und damit zum Abdichten zur Verfügung. Der kreissegmentige Querschnitt, welcher in **Figur 2 (g)** gezeigt ist, bietet wiederum ein großes von der Sicke 6 umfasstes Volumen bei geringem Materialeinsatz. Der in **Figur 2 (h)** gezeigte ovalsegmentige Querschnitt bietet einen Unterschnitt des Flansches 5 und damit beispielsweise die Möglichkeit, den Kapseldeckel 4 (nicht gezeigt) mit einen Füllmaterial (nicht gezeigt) zum Befestigen zu verklemmen.

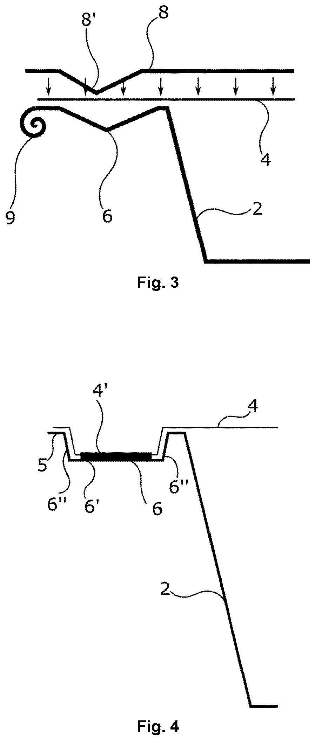

**Figur 3** zeigt schematisch den dritten Schritt des Verfahrens zur Herstellung einer Portionskapsel 1 gemäß einer weiteren beispielhaften Ausführungsform der vorliegenden Erfindung. Dargestellt sind in Teilen das Basiselement 2, der Flansch 5 und die Verdickung 9. Der Siegelstempel 8 wird von oben an das Basiselement 2 herangeführt. Der Kapseldeckel 4 liegt lose auf dem Flansch 5 auf. Die Sickenausbuchtung 8' des Siegelstempels 8 trifft die Sicke 6 durch den Kapseldeckel 4 nicht genau mittig, sondern hier dargestellt leicht links versetzt. Durch die an die Sicke 6 angepasst Form der Sickenausbuchtung 8' verschiebt der Siegelstempel 8 beim Einführen der Sickenausbuchtung 8' das Basiselement 2 mit dem Flansch 5 so, dass die Sicke 6 exakt zur Sickenausbuchtung 8' ausgerichtet ist. Die Beweglichkeit der Portionskapsel 1 wird durch einen Rüttler (nicht gezeigt) unterstützt, welcher die Portionskapsel 1 in Schwingung versetzt. Der Siegelstempel 8 presst nun den Kapseldeckel 4 auf den Flansch 5, beziehungsweise die Sickenausbuchtung 8' des Siegelstempels 8 presst den Kapseldeckel 4 in die Sicke 6, und befestigt mit Ultraschallsiegeln oder durch das Einbringen von Wärme den Kapseldeckel 4 zumindest teilweise am Flansch 5 und zumindest teilweise in der Sicke 6. Denkbar ist aber auch, dass die Sicke 6 erst durch Einpressen der Sickenausbuchtung 8' in den Flansch 5 entsteht.

**Figur 4** zeigt eine schematische Schnittbildteilansicht einer Portionskapsel 1 gemäß einer weiteren beispielhaften Ausführungsform der vorliegenden Erfindung. Gezeigt ist der in der Sicke 6 am Boden 6' der Sicke 6 am Flansch 5 befestigte Kapseldeckel 4. Der Kapseldeckel 4 ist im Bereich des Bodens 6' der Sicke 6 mit der Siegelnaht 4' an den Flansch 5 gesiegelt. In der gezeigten beispielhaften Ausführungsform ist der Kapseldeckel 4 nicht im Bereich der Wände 6" der Sicke 6 an den Flansch 5 gesiegelt.

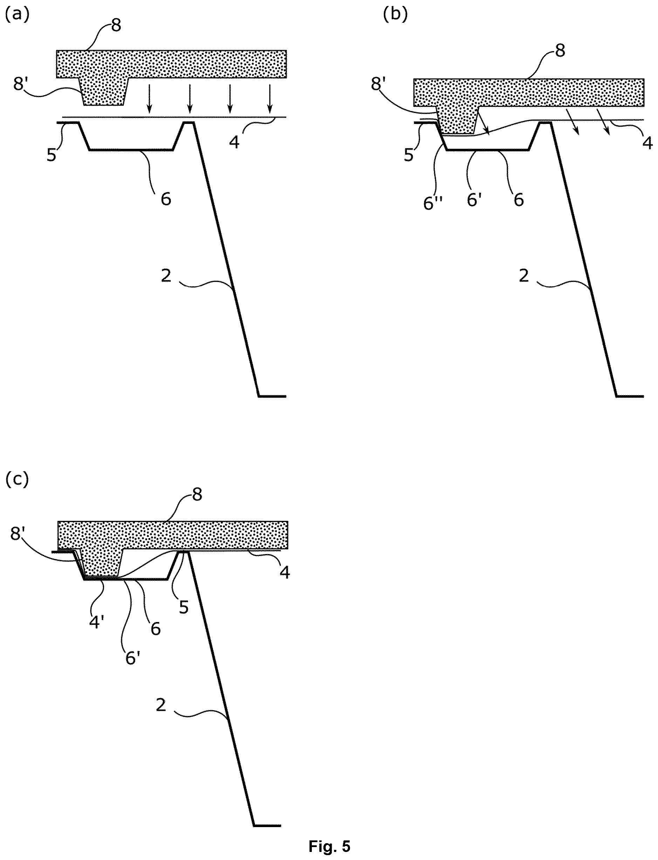

**Figuren 5 (a)** - **(c)** zeigen schematisch einen Teil des dritten Schrittes des Verfahrens zur Herstellung einer Portionskapsel 1 gemäß einer weiteren beispielhaften Ausführungsform der vorliegenden Erfindung. In **Figur 5(a)** ist gezeigt wie sich der Siegelstempel 8 mit der Sickenausbuchtung 8' in Richtung der Sicke 6 senkt. Die Sickenausbuchtung 8' ist hier gegenüber der Sicke 6 nach links versetzt. In **Figur 5 (b)** ist gezeigt, wie die Sickenausbuchtung 8' auf die linke Wand 6" der Sicke 6 trifft. Das Basiselement 2 und der Siegelstempel 8 sind mit Rüttlern (nicht gezeigt) in Schwingung versetzt. Beim weiteren Absenken des Siegelstempels 8 in Richtung des Bodens 6' der Sicke 6 verschiebt sich verschiebt sich der Siegelstempel 8 durch den Druck gegen die Sicke 6 nach rechts. In einer weiteren alternativen Ausführungsform verschiebt sich das Basiselement 2 nach links, in einer weiteren alternativen Ausführungsform verschiebt sich das Basiselement 2 nach links und der Siegelstempel 8 verschiebt sich nach rechts. Die Sickenausbuchtung 8' drückt den Kapseldeckel 4 in die Sicke 6. In **Figur 5 (c)** ist gezeigt, wie der Siegelstempel 8 zum Siegeln auf dem Kapseldeckel 4 aufliegt. Der Kapseldeckel 4 wird im Bereich der Sicke 6 am Boden 6' der Sicke 6 mit der Sickennaht 4 durch Siegeln am Flansch 5 befestigt.

### Bezugszeichenliste

- 1: Portionskapsel
- 2: Basiselement
- 2': Kapselwand
- 2": Kapselboden
- 3: Kapselinnenraum
- 4: Kapseldeckel
- 4': Siegelnaht
- 5: Flansch
- 6: Sicke
- 6': Boden der Sicke
- 6": Wand der Sicke
- 8: Siegelstempel
- 8': Sickenausbuchtung
- 9: Verdickung
- 10: Aufnahme

## Patentansprüche

1. Verfahren zur Herstellung einer Portionskapsel (1), wobei in einem ersten Schritt ein Basiselement (2), aufweisend einen Kapselboden (2"), eine den Kapselboden (2") umlaufende Kapselwand (2') und einen die Kapselwand (2') umlaufenden Flansch (5), in einem Umformverfahren hergestellt wird, wobei in einem zweiten Schritt ein Getränkerohmaterial in einen von dem Kapselboden (2") und der Kapselwand (2') umrandeten Kapselinnenraum (3) gefüllt wird, wobei in einem dritten Schritt ein den Kapselinnenraum (3) verschließender Kapseldeckel (4) an dem Flansch (5) befestigt wird, **dadurch gekennzeichnet, dass** nach dem dritten Schritt eine die Kapselwand (2') umlaufende Sicke (6) in den Flansch (5) eingeprägt wird.

2. Verfahren nach Anspruch 1, wobei die Sicke (6) durch den Kapseldeckel (4) eingeprägt wird, wobei vorzugsweise die Sicke (6) in den Flansch (5) und in den Kapseldeckel (4) geprägt wird.

3. Verfahren nach einem der Ansprüche 1 bis 2, wobei der dritte Schritt durch Siegeln mit einem Siegelstempel (8) durch Einbringen von Wärme oder durch Ultraschallsiegeln durchgeführt wird.

4. Verfahren nach einem der vorhergehenden Ansprüche, wobei im ersten Schritt das Basiselement (2) mittels eines Thermoformverfahrens, eines Druckumformverfahrens, eines Zugdruckumformverfahrens, eines Zugumformverfahrens, eines Einkomponentenoder Mehrkomponenten-Spritzgussverfahrens und/oder eines In-Mold-Verfahren, bevorzugt aus einem Aluminiummaterial mittels Urformen oder Umformen, insbesondere mittels Warmverformen oder Kaltverformen, hergestellt wird.

5. Verfahren nach einem der vorhergehenden Ansprüche, wobei zumindest das Basiselement (2) zumindest während Teilen der Herstellung in einer Aufnahme (10) angeordnet wird.

6. Verfahren nach Anspruch 5, wobei die Aufnahme (10) für das Umformverfahren als Form genutzt wird.

7. Verfahren nach einem der Ansprüche 5 bis 6, wobei durch die Aufnahme (10) für das Umformverfahren Wärme abgegeben wird.

8. Verfahren nach einem der vorhergehenden Ansprüche, wobei der dritte Schritt durch Laserschweißen durchgeführt wird.

9. Verfahren nach Anspruch 3, wobei das Basiselement (2) in einer Ebene parallel zur Haupterstreckungsebene des Kapseldeckels (4) zur Ausrichtung des Basiselementes (2) und des Siegelstempels (8) relativ zueinander frei beweglich ist.

10. Verfahren nach Anspruch 9, wobei das Basiselement (2) in mechanische Schwingung versetzt wird.

## Claims

1. Method for producing a portion capsule (1), wherein, in a first step, a basic element (2), having a capsule bottom (2"), a capsule wall (2') encircling the capsule bottom (2") and a flange (5) encircling the capsule wall (2'), is produced in a forming process, wherein, in a second step, a beverage raw material is placed into a capsule interior (3) bordered by the capsule bottom (2") and the capsule wall (2'), wherein, in a third step, a capsule cover (4) closing the capsule interior (3) is fastened to the flange (5), **characterized in that**, after the third step, a bead (6) encircling the capsule wall (2") is impressed into the flange (5) .

2. Method according to Claim 1, wherein the bead (6) is impressed through the capsule cover (4), wherein preferably the bead (6) is pressed into the flange (5) and into the capsule cover (4).

3. Method according to either of Claims 1 or 2, wherein the third step is carried out by sealing with a sealing stamp (8) by introducing heat or by ultrasonic sealing.

4. Method according to one of the preceding claims, wherein, in the first step, the basic element (2) is produced by means of a thermoforming process, a compression forming process, a tension and compression forming process, a tension forming process, a single-component or multi-component injection molding process and/or an in-mold process, preferably from an aluminum material by means of primary forming or forming, in particular by means of hot forming or cold forming.

5. Method according to one of the preceding claims, wherein at least the basic element (2) is arranged in a receptacle (10) at least during parts of the production.

6. Method according to Claim 5, wherein the receptacle (10) for the forming process is used as a mold.

7. Method according to either of Claims 5 or 6, wherein heat is output by the receptacle (10) for the forming process.

8. Method according to one of the preceding claims, wherein the third step is carried out by laser welding.

9. Method according to Claim 3, wherein the basic element (2) is freely movable in a plane parallel to the main plane of extent of the capsule cover (4) in order to align the basic element (2) and the sealing stamp (8) relative to each other.

10. Method according to Claim 9, wherein the basic element (2) is caused to mechanically vibrate.

## Revendications

1. Procédé de fabrication d'une capsule dosette (1), dans lequel, dans une première étape, un élément de base (2) présentant un fond de capsule (2"), une paroi de capsule (2') entourant le fond de capsule (2") et une bride (5) entourant la paroi de capsule (2') est fabriqué dans un procédé de formage, dans lequel, dans une deuxième étape, une matière première de boisson est placée dans un espace intérieur de capsule (3) délimité par le fond de capsule (2") et la paroi de capsule (2'), dans lequel, dans une troisième étape, un couvercle de capsule (4) fermant l'espace intérieur de capsule (3) est fixé à la bride (5), **caractérisé en ce qu'**après la troisième étape, une moulure (6) entourant la paroi de capsule (2') est gaufrée dans la bride (5).

2. Procédé selon la revendication 1, dans lequel la moulure (6) est gaufrée à travers le couvercle de capsule (4), la moulure (6) étant de préférence gaufrée dans la bride (5) et dans le couvercle de capsule (4).

3. Procédé selon l'une quelconque des revendications 1 à 2, dans lequel la troisième étape est réalisée par scellage avec un poinçon de scellage (8) par introduction de chaleur ou par scellage par ultrasons.

4. Procédé selon l'une quelconque des revendications précédentes, dans lequel, dans la première étape, l'élément de base (2) est fabriqué au moyen d'un procédé de thermoformage, d'un procédé de formage par compression, d'un procédé de formage par traction et compression, d'un procédé de formage par traction, d'un procédé de moulage par injection à un composant ou plusieurs composants et/ou d'un procédé dans le moule, de préférence à partir d'un matériau d'aluminium par première transformation ou seconde transformation, en particulier par formage à chaud ou formage à froid.

5. Procédé selon l'une quelconque des revendications précédentes, dans lequel au moins l'élément de base (2) est agencé dans un réceptacle (10) au moins pendant des parties de la fabrication.

6. Procédé selon la revendication 5, dans lequel le réceptacle (10) est utilisé en tant que moule pour le procédé de formage.

7. Procédé selon l'une quelconque des revendications 5 à 6, dans lequel de la chaleur est émise à travers le réceptacle (10) pour le procédé de formage.

8. Procédé selon l'une quelconque des revendications précédentes, dans lequel la troisième étape est réalisée par soudage au laser.

9. Procédé selon la revendication 3, dans lequel l'élément de base (2) est librement mobile dans un plan parallèle au plan d'extension principal du couvercle de capsule (4) pour l'alignement de l'élément de base (2) et du poinçon de scellage (8) l'un par rapport à l'autre.

10. Procédé selon la revendication 9, dans lequel l'élément de base (2) est mis en vibration mécanique.
